# DEMANDE DE BREVET EUROPEEN

(11) **EP 2 186 700 A1**
(43) Date de publication de la demande: **19.05.2010**
(21) Numéro de dépôt: 09175044.8
(22) Date de dépôt: 04.11.2009
(51) Int. Cl.: B60T 17/06, B60T 11/232, B60T 11/26, B60T 13/565, B60T 13/57, B60T 13/573

(54) **Système de freinage comprenant un servomoteur d'assistance pneumatique d'actionnement rapide.**

(30) Priorité: 18.11.2008 FR 0806430
(71) Demandeur: Robert Bosch GmbH, 70442 Stuttgart (DE)
(72) Inventeur: Attard, Jean-Marc, 60340, VILLERS SOUS ST LEU (FR); Anderson, Chris, 75002, PARIS (FR); Angleviel, Hervé, 75011, PARIS (FR)
(74) Mandataire: Hurwic, Aleksander Wiktor

(57) **Abrégé**

La présente invention concerne un système de freinage muni d'un servomoteur d'assistance pneumatique d'actionnement rapide commandant le déplacement d'un piston à une vitesse supérieure à la vitesse d'une tige commandant ce piston.

Conformément à l'invention, un tel système est **caractérisé en ce qu**'au moins une rondelle flottante (21) est située entre le maître-cylindre et le réservoir (20) de liquide de frein de façon à limiter le passage du liquide de frein (22) vers le réservoir lors d'un freinage.

## Description

La présente invention concerne un système de freinage comprenant un servomoteur d'assistance pneumatique d'actionnement rapide, notamment associé à un maître cylindre muni de rondelles flottantes.

Un système de freinage connu comprenant un servomoteur d'assistance pneumatique d'actionnement rapide est décrit, par exemple, dans le brevet FR 2856363.

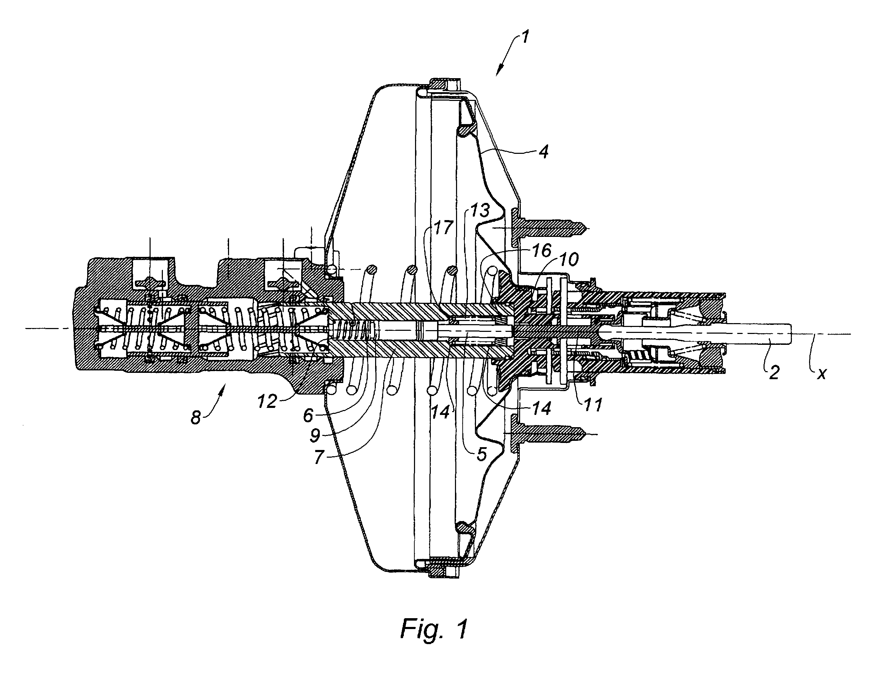

Un tel système comprend un servomoteur 1 (figure 1) d'assistance pneumatique commandé par une tige 2 pouvant entraîner l'ouverture d'une valve déclenchant un déplacement assisté d'une jupe 4 du servomoteur 1.

Un piston auxiliaire 5 est monté à coulissement étanche dans un perçage axial 6 traversant un piston hydraulique 7 et en communication avec une chambre primaire d'un maître-cylindre 8.

Le piston auxiliaire 5 est muni, à une première extrémité 9 longitudinale avant, d'une première surface entrante soumise à la pression hydraulique régnant dans le maître-cylindre 8, sa deuxième extrémité arrière 10 étant en regard du palpeur 11 du servomoteur 1.

Par ailleurs, le servomoteur est muni de moyens permettant de déplacer le piston auxiliaire à une vitesse supérieure à la vitesse de la tige de commande 2.

Un tel servomoteur 1 d'assistance pneumatique d'actionnement rapide permet ainsi de maintenir une montée en pression du liquide de freinage dans le maître-cylindre 2 à partir d'un premier appui sur la pédale de frein.

En d'autres termes, le conducteur n'a pas à enfoncer d'avantage la pédale de frein pour maintenir l'alimentation de la chambre de travail en fluide pneumatique à haute pression après un premier appui sur la pédale.

La présente invention résulte de la constatation que, en déplaçant le piston auxiliaire à une vitesse élevée, supérieure à la vitesse de la tige de commande, un servomoteur d'assistance pneumatique d'actionnement rapide permet d'utiliser de façon efficace des rondelles flottantes dans le réservoir de liquide de frein.

En effet, comme décrit ultérieurement, de telles rondelles flottantes, destinées notamment à éliminer la course morte du piston lors de la montée en pression du liquide de freinage, ne sont efficaces que lorsque la montée en pression du liquide de frein est suffisamment rapide dans le maître-cylindre.

Or des essais ont montré qu'un servomoteur d'actionnement rapide délivre une montée en pression suffisamment rapide pour permettre un fonctionnement satisfaisant des rondelles flottantes.

C'est pourquoi, la présente invention concerne un système de freinage muni d'un servomoteur d'assistance pneumatique d'actionnement rapide commandant le déplacement d'un piston à une vitesse supérieure à la vitesse d'une tige commandant ce piston, **caractérisé en ce qu**'au moins une rondelle flottante est située entre le maître-cylindre et le réservoir de liquide de frein de façon à limiter le passage du liquide de frein vers le réservoir lors d'un freinage.

Grâce à l'invention, les avantages liés à l'utilisation d'un servomoteur d'actionnement rapide - course réduite, effort de freinage limité - sont accrus par une utilisation efficace de rondelles flottantes dans le maître cylindre.

Dans une réalisation, le système de freinage comprend des joints latéraux destinés à coopérer avec la rondelle flottante pour limiter le passage du liquide de frein.

Selon une réalisation, le système comprend des passages de fuite permettant un écoulement minimum de liquide de frein entre le maître-cylindre et le réservoir de liquide de frein.

L'invention concerne également un procédé de freinage mettant en oeuvre un servomoteur d'assistance pneumatique d'actionnement rapide commandant le déplacement d'un piston à une vitesse supérieure à la vitesse d'une tige commandant ce piston, **caractérisé en ce qu**'il utilise une rondelle flottante située entre le maître-cylindre et le réservoir de liquide de frein pour limiter le passage de liquide de frein vers le réservoir lors d'un freinage.

Dans une réalisation, le procédé limite le passage du liquide de frein en maintenant la rondelle flottante au contact de joints latéraux indépendamment de la vitesse de déplacement de la tige de commande.

Selon une réalisation, le procédé utilise des passages de fuite pour permettre un écoulement minimum de liquide de frein entre le maître-cylindre et le réservoir de liquide de frein.

D'autres caractéristiques et avantages de l'invention apparaîtront à la lumière de la description d'une réalisation de l'invention effectuée ci-dessous, à titre illustratif et non limitatif, en faisant référence aux figures ci-jointes sur lesquelles :
- la figure 1, déjà décrite, est un schéma d'un système de freinage muni d'un servomoteur d'actionnement rapide, et
- les figures 2 et 3 représentent le fonctionnement d'une rondelle flottante dans un système de freinage conforme à l'invention.

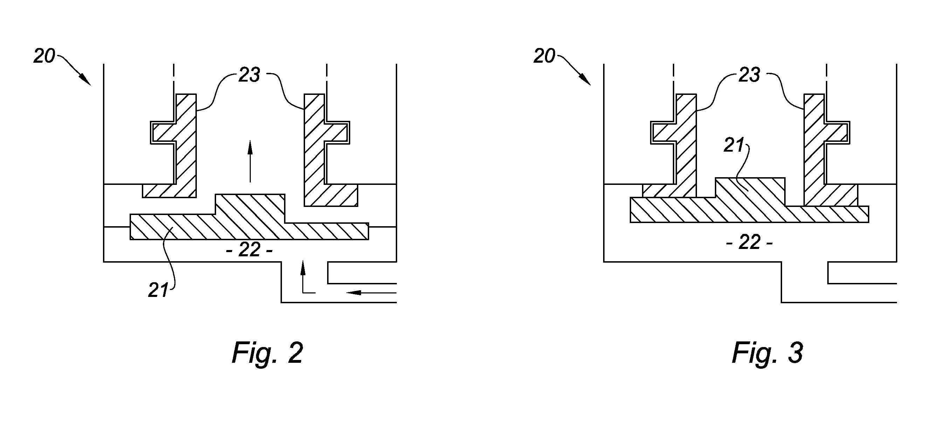

En référence à la figure 2, un réservoir 20 de liquide de freinage est représenté muni d'une rondelle flottante 21 lorsque le système de freinage - non représenté - associé au réservoir 20 n'est pas sollicité.

Une rondelle flottante 21 est utilisée pour limiter le passage du liquide de frein 22 du maître-cylindre 8 (figure 1) vers le réservoir de liquide de frein lorsque le frein est sollicité.

De fait, lors d'une telle activation, la poussée transmise par le piston dans le liquide de frein du maître-cylindre entraîne un déplacement du liquide de frein vers son réservoir qui provoque le contact de la rondelle contre des joints 23 (figure 3) latéraux.

Lorsque ce contact est établi, le passage de liquide de frein du maître-cylindre 8 vers le réservoir est limité, de telle sorte que la pression du liquide augmente plus rapidement dans le circuit de liquide de frein. Avantageusement, la section de fuite vers le réservoir est inférieure à 0,2 mm² par exemple comprise entre 0,05 mm² et 0,15 mm²_{.}

La rondelle 21 flottante diminue ainsi le volume de liquide de frein à compresser et, corrélativement, la course de pédale requise pour atteindre une augmentation de pression donnée.

Toutefois, des passages de fuite - par exemple par rainurage de la surface d'étanchéité de la pièce - sont requis pour assurer notamment une détente de pression résiduelle vers le réservoir lors de certains modes de fonctionnement du système de freinage.

Par exemple, la mise en oeuvre d'un système de freinage selon le mode « ESP » pour « electronic stability program » requiert une telle détente.

En cas d'application lente, c'est-à-dire lorsque l'utilisateur sollicite faiblement son système de freinage, il est apparu qu'une rondelle flottante était inefficace en termes de réduction de course de pédale du fait des passages de fuite - non représentés sur les figures 2 et 3.

Mais conformément à la constatation propre à l'invention, un système de freinage muni d'un servomoteur d'assistance pneumatique d'actionnement rapide met en oeuvre, de façon constante, une vitesse initiale du piston élevée.

Pour un canal de fuite du maître-cylindre 8 vers le réservoir de section inférieure à 0,15 mm² on obtient une réduction de course morte de 0,5 mm au niveau de la tige de commande pour une vitesse de 5 mm/s de cette tige.

Ainsi, les rondelles peuvent assurer leur fonction pendant la course morte du maître-cylindre.

En résumé, l'invention permet d'assurer l'efficacité des rondelles flottantes puisque le maître-cylindre connaît, lors de chaque freinage, une montée en pression élevée grâce à l'utilisation d'un servomoteur d'actionnement rapide.

Cette efficacité des rondelles flottantes entraîne une course réduite de la course pédale pour obtenir une montée en pression du liquide de freinage donné.

Finalement, il convient de noter que l'utilisation de rondelle flottante dans le réservoir/maître-cylindre est aisée à mettre en oeuvre, cette utilisation limitant les différences en terme de pièces standards ou de sensations entre un système de freinage muni d'un servomoteur classique et un système de freinage muni d'un servomoteur d'actionnement rapide.

## Revendications

1. Système de freinage muni d'un servomoteur (1) d'assistance pneumatique d'actionnement rapide commandant le déplacement d'un piston (5) à une vitesse supérieure à la vitesse d'une tige (2) commandant ce piston, **caractérisé en ce qu'**au moins une rondelle flottante (21) est située entre le maître-cylindre (8) et le réservoir (20) de liquide de frein de façon à limiter le passage du liquide de frein (22) vers le réservoir lors d'un freinage.

2. Système selon la revendication 1 **caractérisé en ce qu'**il comprend des joints latéraux (23) destinés à coopérer avec la rondelle flottante pour limiter le passage du liquide de frein (22).

3. Système selon la revendication 1 **caractérisé en ce qu'**il comprend des passages de fuite permettant un écoulement minimum de liquide de frein entre le maître-cylindre et le réservoir de liquide de frein (22).

4. Procédé de freinage mettant en oeuvre un servomoteur (1) d'assistance pneumatique d'actionnement rapide commandant le déplacement d'un piston (5) à une vitesse supérieure à la vitesse d'une tige (2) commandant ce piston, **caractérisé en ce qu'**il utilise une rondelle flottante (21) située entre le maître-cylindre (8) et le réservoir (20) de liquide de frein pour limiter le passage de liquide de frein (22) vers le réservoir lors d'un freinage.

5. Procédé selon la revendication 4 **caractérisé en ce qu'**il limite le passage du liquide de frein (22) en maintenant la rondelle flottante au contact de joints latéraux (23) indépendamment de la vitesse de déplacement de la tige de commande (2).

6. Procédé selon la revendication 4 ou 5 **caractérisé en ce qu'**il utilise des passages de fuite pour permettre un écoulement minimum de liquide de frein entre le maître-cylindre et le réservoir de liquide de frein (22).
